# EUROPÄISCHE PATENTSCHRIFT

(11) **EP 1 522 050 B1**
(45) Veröffentlichungstag und Bekanntmachung des Hinweises auf die Patenterteilung: **22.03.2006**
(21) Anmeldenummer: 03763779.0
(22) Anmeldetag: 10.07.2003
(51) Int. Cl.: G06T 9/00, G06T 9/20

(54) **VERFAHREN ZUM KOMPRIMIEREN UND DEKOMPRIMIEREN VON VIDEOBILDDATEN**
METHOD FOR COMPRESSING AND DECOMPRESSING VIDEO IMAGE DATA
PROCEDE DE COMPRESSION ET DE DECOMPRESSION DE DONNEES D'IMAGE VIDEO

(30) Priorität: 12.07.2002 DE 10231613
(43) Veröffentlichungstag der Anmeldung: 13.04.2005
(73) Patentinhaber: Atvisican AG, 45239 Essen (DE)
(72) Erfinder: PROCHNOW, Uwe, 45239 Essen (DE)
(74) Vertreter: Hanewinkel, Lorenz
(86) Internationale Anmeldenummer: PCT/EP2003/007451
(87) Internationale Veröffentlichungsnummer: WO 2004/008393

(56) Entgegenhaltungen:
- US-A- 5 778 100
- CHRISTOPOULOS V A ET AL: "Segmented image coding with contour simplification for video sequences" PROCEEDINGS OF THE INTERNATIONAL CONFERENCE ON IMAGE PROCESSING (ICIP) LAUSANNE, SEPT. 16 - 19, 1996, NEW YORK, IEEE, US, Bd. 1, 16. September 1996 (1996-09-16), Seiten 693-696, XP010202160 ISBN: 0-7803-3259-8
- CHUANG GU ET AL: "Very low bit-rate video coding using multi-criterion segmentation" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. 3 CONF. 1, 13. November 1994 (1994-11-13), Seiten 418-422, XP010146204 ISBN: 0-8186-6952-7
- EDIRISINGHE E A ET AL: "A contour analysis based technique to extract objects for MPEG-4" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7. Juni 1999 (1999-06-07), Seiten 369-374, XP010342839 ISBN: 0-7695-0253-9
- KAUP A: "OBJECT-BASED TEXTURE CODING ON MOVING VIDEO IN MPEG-4" IEEE TRANSACTIONS ON CIRCUITS AND SYSTEMS FOR VIDEO TECHNOLOGY, IEEE INC. NEW YORK, US, Bd. 9, Nr. 1, Februar 1999 (1999-02), Seiten 5-15, XP000802283 ISSN: 1051-8215

## Beschreibung

Die Erfindung betrifft ein Verfahren zum Komprimieren und Dekomprimieren von Videobilddaten von Videobildfolgen, die als eine Folge von jeweils in zweidimensional adressierbaren Pixeln zugehöriger Pixeldaten vorliegen, wobei jeweils die Pixeldaten ausgewählter Pixelmengen mit mathematischen Funktionen analysiert und auf deren Funktionsparameter reduziert komprimiert werden und nach einer Speicherung und/oder Übertragung mit einer entsprechenden mathematischen Funktion bis auf Toleranzfehler regeneriert dekomprimiert werden, wobei
- Konturen von Bildstrukturen anhand von sprunghaften Änderungen von Helligkeit und/oder Farbwert bei einander benachbarten Pixeln ermittelt werden, wobei alle Objekte, die eine Pixelanzahl unterhalb einer vorgebbaren Schwelle enthalten, einem Hintergrund zugeordnet werden,
- für die Pixeldaten der einzelnen Objekte und des Hintergrundes je eine Strukturfunktion ermittelt wird, mittels derer die jeweiligen Pixeldaten sich als Ergebnis einer elementaren mathematischen Rechenoperation darstellen lassen. und daß bei Folgeanalysen von Videobildern
- jeweils die differentiellen Veränderungen der Helligkeit, Größe, Lage und Orientierung der Objekte unter Berücksichtigung gemeinsamer Konturen aneinanderstoßender Objekte bestimmt werden,
- die so definierten Objekte und der Hintergrund zusammen mit ihren so gewonnenen helligkeits-, farb- und lagemäßigen sowie strukturellen Daten in einem strukturierten Grundrahmen oder Folgerahmen angeordnet und bereitgestellt werden;
- die demgemäß bereitgestellten Grundrahmen- und Folgerahmendaten zur Dekompression und einer Bildwiederaufbereitung in Pixeldaten transformiert werden,
- indem aus den Grundrahmendaten aus den Objekten deren zugehörige Konturlagedaten im Pixelbild bestimmt werden,
- für den Hintergrund des Bildes und die Objekte, jeweils anhand der Konturlagedaten begrenzt, die Pixeldarstellung entsprechend der jeweilig zugehörigen Strukturfunktion mit Pixeldaten aufgefüllt werden, und
- die Folgerahmendaten jeweils auf die vorherige Pixeldarstellung zur Verlagerung und/oder Veränderung der Objekte angewandt werden.

Ein derartiges Verfahren ist aus Christopoulos et al: "Segmented Image Coding with Contour Simplification for Video Sequences", Proceedings Of The International Conference On Image Processing (ICIP), Lausanne, Sept. 16 - 19, 1996, New York, IEEE, US(16-09-1996), Bd. 1, S. 693-696, bekannt.

Derartige Verfahren sind auch unter den ISO-Standards MPEG, MPEG1 bis MPEG4, JPEG, etc. bekannt geworden. Bei diesen werden durch eine Differentialanalyse, Musteranalyse, Fourieranalyse od. dgl. der Pixelmengendaten von Bildausschnitten, sog. Kacheln, und insbesondere von solchen Kacheldaten in Bezug auf die Kacheldaten der Kachel mit gleichen Bildzeilen- und Bildspalten-Koordinaten von vorhergehenden Videobildern Funktionsparamter ermittelt und unter Berücksichtigung von Veränderungen in diesen Videobildfolgen verabredeten Standard-Rahmenformaten gemäß dargestellt. Die Rahmenformate enthalten jeweils eine Angabe der entsprechenden Kompressionsfunktion, die jeweils umso weitergehend komprimierend ausgewählt ist je stärker der Inhalt aufeinanderfolgender Bilder oder gleichgelagerter Kacheln von solchen Bildern übereinstimmen, und die bei der Anwendung der Funktion jeweils gewonnenen Parameter.

Zur Dekompression wird jeweils aus dem Rahmen die Angabe über die jeweilige Kompressionsfunktion entnommen und dieser gemäß mittels einer entsprechenden Funktion und den bereitgestellten Parametern sowie ggf. Daten der Kachel(n) mindestens eines vorhergehenden Bildes die ursprüngliche Pixelmenge bis auf Toleranzfehler wieder hergestellt.

Es ist Aufgabe der Erfindung, das eingangs bezeichnete Verfahren zu verbessern und eine wesentlich höhere Komprimierung der Daten im Echtzeitdurchlauf von Videobildfolgedaten bei annähernd gleicher Bildqualität wie die bekannten Verfahren zu erbringen.

Die Lösung besteht darin, daß in einer Grundanalyse der Videodaten eines Videobildes
- durch Interpolation eine Konturglättung und -schließung vorgenommen wird,
- die so gefundenen Konturen jeweils abschnittsweise durch eine parametrisierte mathematische Funktion beschrieben und als Objekte definiert werden,
- für die einzelnen Objekte und den Hintergrund eine Farbdominanz und ein Farbverlauf vektoriell nach Richtung und Größe ermittelt wird,
- die Lage und Erstreckung der einzelnen Objekte jeweils vektoriell bestimmt werden,
- bei der Dekompression die Konturenverläufe der einzelnen Objekte und des Hintergrundes aus den parametrischen mathematischen Konturfunktionen deren vektorielle Lage- und Erstreckungsdaten bestimmt werden
- und die Pixeldaten innerhalb der Konturenverläufe gemäß des jeweiligen Farbdominanzwertes und des zugehörigen Farbverlaufvektors sowie des Helligkeitswertes restituiert werden.

Vorteilhafte Ausgestaltungen sind in den Unteransprüchen angegeben.

Die Ermittlung und Beschreibung der Objekte anhand ihrer Konturen und deren Strukturen führt zu der extrem hohen Datenkompression im Vergleich zu den herkömmlichen Verfahren, bei denen jeweils einzelne rechteckige Ausschnitt bearbeitet werden, ohne einen größeren bildlichen Zusammenhang zu erfassen und zu nutzen.

Zur Beschleunigung des Verfahrens werden außerdem in den einzelnen Verfahrensschritten vorteilhafte Methoden angewandt.

Aufgrund der Erkenntnis, daß sich viele Objekte in ihrer Grundstruktur und in ihrer Beziehung zu anderen gleichen, z. B. Kopf, Arme, Oberkörper, Unterkörper, Beine zu einer Person etc., werden einmal erkannte und funktionsmäßig charakterisierte Objekte anhand ihrer Daten in einem neuronalen Netz zugeordnet zu dessen weiteren und zugehörigen Objekten Konturdaten abgelegt, so daß jeweils zu einem aufgefundenen Objekt üblicher Weise angrenzende Objekte später unmittelbar aufgefunden werden und zur Erleichterung der Konturermittlung herangezogen werden können.

Auch können die Zusammenstellungen der mathematischen Funktionsbeschreibungen der verschiedenen Objekte aus dem neuronalen Netz entnommen werden, die nur mit entsprechenden aktuellen Parametern, wie Radius, Mittelpunktsvektor, Anfangs- und Endkoordinaten etc. zu versehen sind.

Auch die Strukturfunktion eines Objektes ist häufig der gleichartiger Objekte gleich oder nahekommend, so daß sie als erste Annäherung dienen kann, wenn sie im Neuronennetz gespeichert ist und diesem entnommen wird.

Eine sehr hohe Kompression wird vorteilhaft durch die Nutzung der Erkenntnis erreicht, daß die Pixeldaten einer Pixelzeile jeweils eine Zahlenreihe ist, die sich durch mit natürlichen Zahlen ausgeführte elementare Rechenoperationen darstellen läßt. Insbesondere die Division und die n-te Wurzel sind einfache Operationen, die mehr oder weniger periodische Pixeldaten einer Zeile gut angenähert erbringen. Die Darstellung der Zeile schrumpft dann auf die verschlüsselte Angabe der Funktion und die Zahlenwerte, die vorzugsweise als Summe oder Differenzen von Primzahlenpotenzen dargestellt sind.

Jede bereits zu einer Pixeldatenfolge aufgefundene derartige Strukturbeschreibung wird vorzugsweise in einem neuronalen Netz abgelegt, so daß sie dort unmittelbar nutzbar oder als erste Annäherung bei späterem Vorliegen einer ähnlichen Pixeldatenfolge abzurufen ist.

Da die zu verwendenden Funktionen elementar sind und von üblichen Rechnern mit hoher Geschwindigkeit als Festkommaoperationen auszuführen sind, lassen sich aus den Strukturdaten die Pixeldaten in der Laufzeit einer Bildwiedergabe generieren; die Dekompression ist völlig problemlos.

Die Kompression von Video-Laufzeitdaten wird in ihren einzelnen Schritten vorteilhaft in ihrer Präzision an die Verträglichkeit von Abweichungen angepaßt.

Es wird bei der Konturdatenermittlung, Glättung etc. einer hohen Auflösung von bewegten Vordergrundobjekten mehr Aufmerksamkeit gewidmet als dem Hintergrund und den passiven Objekten zuteil wird, indem den Objekten jeweils zur Bearbeitung unterschiedliche maximale Rechenzeiten zugeteilt werden.

Weiterhin wird die Minimal-Anzahl der Pixel, für die ein Objekt definiert wird, jeweils einer noch verfügbaren Rechenzeit angepaßt. Die größten Objekte werden zuerst bearbeitet und soweit noch Rechenzeit für eine Bildzeit übrig ist, werden kleinere Objekte aus dem Hintergrund herausgetrennt und detailliert geometrisch und strukturell beschrieben und in den Rahmen eingestellt.

Für die Ermittlung einer Strukturfunktion eines Objektes wird vorteilhaft jeweils eine Maximalzeitvorgabe vorgenommen, wobei die Erkenntnis genutzt wird, daß Abweichungen der einzelnen Pixeldaten, wenn sie nicht benachbart gehäuft auftreten, keine wesentlichen Bildqualitätseinbußen erbringen, da die Struktur nur das allgemeine Aussehen der Oberfläche eines Objektes, aber keine Bilddetails betrifft.

Als Beispiel einer Strukturfunktion sei zur Veranschaulichung genannt:
x-te Wurzel aus a hoch m +/- b hoch n durch c hoch p +/- d hoch q; x = ganzzahlig 1 ÷ 3; a, b, c, d = Primzahlen bis 17; m, n, p, q = ganzzahlig 1 ÷ 9.

Als zu analysierende Pixelmenge werden beispielsweise jeweils 256 Pixel eines Bildzeilenabschnittes oder eines 8 x 8 oder 16 x 16 Pixelbild-Ausschnittes genommen. Die Pixeldaten sind gewöhnlich in 8-bit verschlüsselt. Demgemäß werden die Operationen nicht dezimal oder hexadezimal sondern modulo 256 ausgeführt, so daß die Quelldaten wie die Verschlüsselungsdaten und die zurückgewonnenen Zieldaten stets als 8-bit Pixeldaten unmittelbar vorliegen.

Werden mehrere Zeilenabschnitte einer Bildzeile oder aufeinanderfolgender Bildzeilen analysiert, so ergibt sich häufig aus einer Fortführung und/oder aus einer Versetzung um einige Stellen der zuvor zutreffenden Strukturfunktion eine passende Lösung in sehr einfacher und zeitsparender Weise. Statt einer neuen Strukturfunktion wird dann die Abwandlung im zugehörigen Rahmen angegeben.

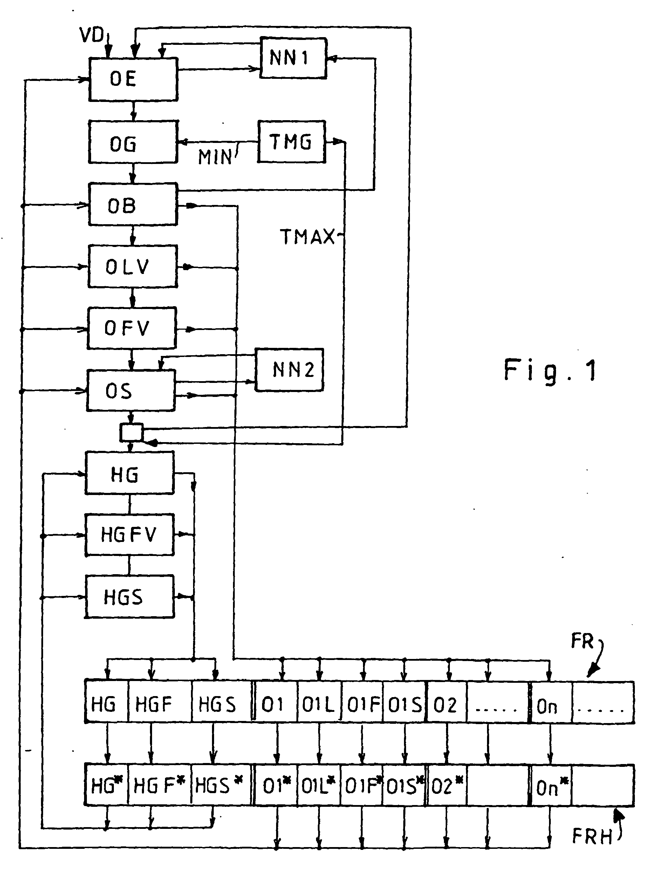

- Fig. 1: zeigt ein Blockschaltbild der Bildverschlüsselung.

Die Videodaten VD werden nach und nach den verschiedenen Verfahrensschritten unterzogen.

Als erstes erfolgt die Objekterkennung OE, wobei die im Bild zuvor erkannten Objekte O*,O2*, On* sowie die in einem ersten neuronalen Netz NN1 abgelegten Objekte als Hilfsinformationen genutzt werden. Die erkannten Objekte werden einer Objektglättung OG unterzogen, wobei eine Auflösungsgrenze MIN vorgegeben ist.

Die geglätteten Objekte werden einer Objektbeschreibung OB unter Beachtung der Nachbarschaftsgrenzbeziehungen unterzogen, so daß die Objekte O1, O2, On etc. funktional in dem Rahmen FR abgelegt werden.

Zu den einzelnen Objekten erfolgt die Festlegung OLV der Lage- und Richtungsvektoren O1L, O2L etc. sowie die Farbbeschreibung OFV mittels der Farb- und Farbverlaufsvektoren O1F, O2F etc.

Weiterhin werden zu den Objekten O1, O2, ..., On die Strukturfunktionen OS und deren Parameter O1S, O2S etc. vorzugsweise unter Zuhilfenahme eines zweiten neuronalen Netzes NN2 bestimmt und im Rahmen FR abgelegt, ebenso wie die Lage- und Farbvektoren.

Sind alle Objekte im Rahmen festgehalten, werden vom Hintergrund HG noch die Farbvektoren HGF, HGFV und die Hintergrundstrukturen HGS ermittelt und in den Rahmen FR abgestellt. Ein kompletter Rahmen FR eines Bildes wird dann als historischer Rahmen FRH bereitgestellt, dessen Inhalte, die jeweils mit einem Stern am Referenzzeichen gekennzeichnet sind, der Verschlüsselung des nächsten Bildes als Ausgangsmaterial zur Verfügung gestellt.

Falls nur geringe Änderungen der Farbe, Lage, Struktur oder Orientierung eines Objektes festgestellt wird, werden nur die Änderungen im Folgerahmen spezifiziert, was eine erhebliche Einsparung an Verarbeitungszeit, Speicher- und Übertragungskapazität erbringt.

Jeweils aufgefundene Objektbeschreibungen, ihre Nachbarschaftsbeziehungen sowie die Strukturfunktionen werden den Basen der neuronalen Netze NN1, NN2 zugeführt, so daß ähnliche Objekte und Strukturen aufgefunden und bei der Verschlüsselung neuer Bilder genutzt werden. ,

Die Verschlüsselungszeit wird jeweils über einen Zeitmanager TMG überwacht und durch geeignete Vorgaben der Mindestauflösung MIN und der Maximalzeit TMAX der Strukturanalyse in Grenzen gehalten.

Eine Alternative der Berechnung der Strukturfunktionen zur zuvor beschriebenen läßt sich ähnlich vorteilhaft mit hexadezimalen Operationen vornehmen, wozu die üblichen 8-bit-Pixelinformationen in zwei 4-bit-Zeichen geteilt werden und so die doppelte Stellenzahl berechnet und auf größtmögliche Ähnlichkeit geprüft wird. Die Funktionen und deren Parameter werden zweckmäßig, insbesondere in dem Zusammenhang, auch als Hexadezimalziffern verschlüsselt und paarweise in 8-bit Bytes im Rahmen verpackt. Je nach der angegebenen Funktion sind mehr oder weniger Parameter anzugeben.

Eine sehr hohe Packungsdichte im Rahmen läßt sich auch dadurch erreichen, wenn in einem Byte jeweils drei Bit für acht Funktionen, 3 Bit für die acht ersten Primzahlen und zwei Bit für deren Exponenten von 1 - 4 abgelegt werden. Als Funktionselemente lassen sich z. B. die vier Grundrechenarten, die Wurzel- und Potenzfunktion sowie Formelklammern verschlüsseln. Zu den Klammerfunktionen lassen sich in den weiteren 5 bit des Bytes weitere Sonderfunktionen angeben, wie ein Formelendezeichen oder komplexe Funktionen.

## Patentansprüche

1. Verfahren zum Komprimieren und Dekomprimieren von Videobilddaten (VD) von Videobildfolgen, die als eine Folge von jeweils in zweidimensional adressierbaren Pixeln zugehöriger Pixeldaten vorliegen, wobei jeweils die Pixeldaten ausgewählter Pixelmengen mit mathematischen Funktionen analysiert und auf deren Funktionsparameter reduziert komprimiert werden und nach einer Speicherung und/oder Übertragung mit einer entsprechenden mathematischen Funktion bis auf Toleranzfeh1er regeneriert dekomprimiert werden, wobei in einer Grundanalyse der Videodaten eines Videobildes
- Konturen von Bildstrukturen anhand von sprunghaften Änderungen von Helligkeit und/oder Farbwert bei einander benachbarten Pixeln ermittelt werden,
- durch Interpolation eine Konturglättung und -schließung (OG) vorgenommen wird,
- die so gefundenen Konturen jeweils abschnittsweise durch eine parametrisierte mathematische Funktion beschrieben und als Objekte definiert werden, wobei alle Objekte, die eine Pixelanzahl unterhalb einer vorgebbaren Schwelle enthalten, einem Hintergrund (HG) zugeordnet werden,
- für die einzelnen Objekte (O1, O2,..., On) und den Hintergrund eine Farbdominanz und ein Farbverlauf vektoriell nach Richtung und Größe ermittelt wird,
- die Lage und Erstreckung der einzelnen Objekte jeweils vektoriell bestimmt werden,
- für die Pixeldaten der einselnen Objekte und des Hintergrundes je eine Strukturfunktion (O1S,O2S) ermittelt wird, mittels derer die jeweiligen Pixeldaten sich als Ergebnis einer elementaren mathematischen Rechenoperation darstellen lassen, und daß bei Folgeanalysen von Videobildern
- jeweils die differentiellen Veränderungen der Helligkeit, Größe, Lage und Orientierung der Objekte unter Berücksichtigung gemeinsamer Konturen aneinanderstoßender Objekte bestimmt werden,
- die so definierten Objekte und der Hintergrund zusammen mit ihren so gewonnenen helligkeits-, farb- und lagemäßigen sowie strukturellen Daten in einem strukturierten Grundrahmen oder Folgerahmen (FR) angeordnet und bereitgestellt werden;
- die demgemäß bereitgestellten Grundrahmen- und Folgerahmendaten zur Dekompression und einer Bildwiederaufbereitung in Pixeldaten transformiert werden,
- indem aus den Grundrahmendaten aus den Objekten deren zugehörige Konturlagedaten im Pixelbild bestimmt werden,
- für den Hintergrund des Bildes und die Objekte, jeweils anhand der Konturlagedaten begrenzt, die Pixeldarstellung entsprechend der jeweilig zugehörigen Strukturfunktion (O1S, O2S) mit Pixeldaten aufgefüllt werden,
- die Pixeldaten innerhalb der Konturenverläufe gemäß des jeweiligen Farbdominanzwertes und des zugehörigen Farbverlaufvektors sowie des Helligkeitswertes restituiert werden,
- die Folgerahmendaten jeweils auf die vorherige Pixeldarstellung zur Verlagerung und/oder Veränderung der Objekte angewandt werden,
- und bei der Dekompression die Konturenverläufe der einzelnen Objekte und des Hintergrundes aus den parametrischen mathematischen Konturfunktionen deren vektorielle Lage- und Erstreckungsdaten bestimmt werden,

2. Verfahren nach Anspruch 1, **dadurch gekennzeichnet, daß** die beschriebenen Objekte mit ihren mathematischen Funktionen in einem neuronalen Netz (NN1) abgelegt werden, das der weiteren Erkennung (OE) von Objekten in Videobilddaten (VD) dient.

3. Verfahren nach einem der vorstehenden Ansprüche, **dadurch gekennzeichnet, daß** ermittelte Strukturfunktionen (OS) mit deren Parametern von Objekten und Hintergründen in einem neuronalen Netz (NN2) gespeichert werden, das bei der weiteren Ermittlung von Strukturfunktionen (OS) mit deren Parametern als eine Ausgangsbasis dient.

4. Verfahren nach einem der vorstehenden Ansprüche, **dadurch gekennzeichnet, daß** die Strukturfunktion (OS) jeweils als eine mathematische Funktion dargestellt ist und die Parameter ganzzahlige Größen sind und die Funktion eine unbegrenzte Zahl von Nachkommastellen liefert.

5. Verfahren nach Anspruch 4, **dadurch gekennzeichnet, daß** die Strukturfunktion (OS) ein Bruch, eine n-te Wurzel oder eine transzendente Funktion ist.

6. Verfahren nach Anspruch 4 oder 5, **dadurch gekennzeichnet, daß** die ganzzahligen Größen als Potenzen von Primzahlen sowie Summen oder Differenz von diesen verschlüsselt dargestellt sind.

7. Verfahren nach einem der Ansprüche 4 bis 6, **dadurch gekennzeichnet, daß** die Parameter modulo 256 dargestellt sind und die Funktion mit Größen, die modulo 256 dargestellt sind, ausgeführt werden und solche Größen als Nachkommastellen liefern.

8. Verfahren nach einem der Ansprüche 4 bis 7, **dadurch gekennzeichnet, daß** die einzelnen Strukturfunktionen (OS) jeweils durch sukzessive Approximation bis auf Toleranzfehler passend zu einer Pixeldatenfolge eines Bildzeilenabschnittes einer vorgegebenen Länge oder eines rechteckigen Pixelbildausschnittes bestimmt werden.

9. Verfahren nach Anspruch 8, **dadurch gekennzeichnet, daß** der Zeilenabschnitt eine Länge von 64, 128 oder 256 Bytes hat oder der Pixelbildausschnitt eine Größe von 8 mal 8 oder 16 mal 16 Bytes aufweist.

10. Verfahren nach einem der Ansprüche 8 oder 9, **dadurch gekennzeichnet, daß** die Strukturfunktion (OS) jeweils gemäß einer Zeitvorgabe (TMAX) oder einer Genauigkeitsvorgabe durch sukzessive Approximation an die jeweils angenähert darzustellende Pixeldatenfolge angepaßt ist.

11. Verfahren nach Anspruch 10, **dadurch gekennzeichnet, daß** die Zeit- oder Genauigkeitsvorgabe abhängig von der Lage oder einer jeweiligen Lageveränderungsgeschwindigkeit des jeweiligen Objektes bestimmt wird, wobei für mittig im Bild liegende und/oder ruhende Objekte eine längere Zeit und/oder eine höhere Genauigkeit zugeteilt wird als randseitigen und/oder relativ schnell bewegten Objekten und/oder dem Hintergrund.

12. Verfahren nach einem der vorstehenden Ansprüche, **dadurch gekennzeichnet, daß** jeweils nur solche Objekte einer weiteren Erkennung und Charakterisierung unterzogen werden, die eine Mindestanzahl von Pixeln aufweist, und kleinere Objekte dem Hintergrund zugeordnet werden.

13. Verfahren nach Anspruch 12, **dadurch gekennzeichnet, daß** die Objekte mit fallender Anzahl von Pixeln nacheinander bearbeitet werden, solange die verfügbare Rechenzeit reicht, wodurch bei der Verschlüsselung eines Bildinhaltes die Mindestanzahl der Pixel der Objekte je nach der verfügbaren Rechenzeit bestimmt ist.

## Claims

1. A method for compressing and decompressing video image data (VD) of video image sequences, which are present as a sequence of in each case two-dimensionally addressable pixels of associated pixel data, wherein in each case the pixel data of selected pixel quantities are analysed with mathematical functions and are compressed reduced to their function parameters and after storage and/or transmission are decompressed with a corresponding mathematical function such that they are largely regenerated, wherein, in a basic analysis of the video data of a video image
- contours of image structures are determined on the basis of non-sequential changes in brightness and/or colour value in the case of pixels that are adjacent to one another,
- through interpolation, a smoothing and closure of contours (OG) is performed,
- the contours that are found in this way are described in segments in each case through a parameterized mathematical function and are defined as objects, wherein all objects that contain a number of pixels below a predefinable threshold are assigned to a background (HG),
- and in the course of decompression the contours of the individual objects and the background, as well as data concerning their vectorial position and extent, are determined with the parametrical mathematical contour functions
- for the individual objects (O1, O2, ...) and the background, a colour dominance and colour progression is determined vectorially in each case,
- the position and extent of the individual objects are determined vectorially in each case,
- for the pixel data of the individual objects and the background, a structure function (O1S, O2S) is determined, which allows to represent the respective pixel data as a result of an elementary mathematical operation
and that in the case of sequence analyses of video images,
- in each case the differential changes in brightness, size, position and orientation of said objects are determined, taking into account the common contours of objects that abut one another,
- the objects and the background that are defined in this way, together with their optical, positional and structural data that are obtained in this way, are arranged and provided in a structured basic frame or sequence frame (FR)
- the basic frame data and sequence frame data that are provided accordingly are transformed into pixel data for decompressing and image re-processing,
- in that from the basic frame data from the objects, the corresponding contour position data in the pixel image are determined,
- for the background of the image and the objects, respectively delimited on the basis of the contour position data, the pixel representation is filled up with pixel data corresponding to the given associated structure function, which are reconstituted in accordance with the colour dominance value and the colour progression vector as well as the brightness value, and
- the sequence frame data are applied in each case to the previous pixel representation for displacement and/or alteration.

2. A method according to claim 1, **characterized in that** the objects described are stored with their mathematical functions in a neural network (NN1), which serves for the further recognition (OE) of objects in video image data (VD).

3. A method in accordance with any of the above claims, **characterized in that** structure functions (OS) that have been determined are stored with their parameters of objects and backgrounds in a neural network (NN2), which serves as a starting basis in the further determination of structure functions (OS) with their parameters.

4. A method in accordance with any of the above claims, **characterized in that** the structure function (OS) is represented in each case as a mathematical function and the parameters are whole-number values and the function provides an unlimited number of places after the decimal point.

5. A method in accordance with claim 4, **characterized in that** the structure function (OS) is a fraction, a nth root or a transcendental function.

6. A method in accordance with claim 4 or 5, **characterized in that** the whole-number values are represented, encrypted, as powers of prime numbers as well as sums or difference thereof.

7. A method in accordance with any of the claims 4 to 6, **characterized in that** the parameters are represented as modulo 2 to the power of 8, and the function is executed with quantities that are represented as modulo 2 to the power of 8, and provide such quantities as places after the decimal point.

8. A method in accordance with any of the claims 4 to 7, **characterized in that** the individual structure functions (OS) are determined in each case approximately matching to a pixel data sequence of an image line segment of predefined length or of a rectangular pixel image segment.

9. A method in accordance with claim 8, **characterized in that in that** the line segment has a length of 64,128 or 256 bytes or the pixel image segment has a size of 8 times 8 or 16 times 16 bytes.

10. A method in accordance with one of the claims 8 or 9, **characterized in that** the structure function (OS) is adapted in each case as long or as precisely through successive approximation to the pixel data sequence that is to be approximately represented in each case, which is determined by a time specification (TMAX) or an accuracy specification.

11. A method in accordance with claim 10, **characterized in that** the time specification or accuracy specification is determined depending on the position of the given object, wherein for objects lying or resting centrally in the image, a longer time and/or higher level of accuracy is assigned than to objects at the edge and/or objects that are in relatively fast motion and/or for the background.

12. A method in accordance with any of the preceding claims, **characterized in that** in each case only those objects are subjected to further identification and characterisation that have a minimum number of pixels, and smaller objects are assigned to the background.

13. A method in accordance with claim 12, **characterized in that** the objects are processed one after another with a decreasing number of pixels as long as the available computing time allows, through which in the encryption of an image content, the minimum number of pixels of the objects is determined according to the available computing time.

## Revendications

1. Méthode pour comprimer et décomprimer des données d'images vidéo (VD), faisant partie d'une succession d'images vidéo, qui sont présentes, chaque fois, sous forme de données de pixels, associées à des points d'image adressables à deux dimensions, réalisées ainsi que les données de pixels, associées à des quantités sélectionnées de points d'image, sont analysées par des fonctions mathématiques et alors comprimées, en les réduisant aux paramètres de la fonction, et après mémorisation et/ou transfert, sont décomprimées, à quelques détails près régénérées, par une fonction mathématique correspondante, ainsi que, dans une analyse élémentaire des données d'une image vidéo,
- des contours des structures de l'image sont déterminés à l'aide de différences discrètes, suivant la luminosité et/ou la couleur, entre des points d'image adjacents,
- un lissage et une fermeture des contours sont effectués par interpolation,
- les contours ainsi trouvés sont décrits par segments, respectivement, par une fonction mathématique paramétrique, et définis comme objets, de manière que tout objet constitué d'un nombre de points d'image dépassant une limite prédefinissable étant classé comme arrière-plan (HG), et pendant décompression les contours des objets individuels et de l'arrière-plan, ainsi que leurs données vectorielles de position et d'étendu, sont déterminés,
- une dominance de couleur et un gradient de couleur sont déterminés, de manière vectorielle, pour chaque objet (01, 02, ...) par rapport à son orientation et dimension,
- la position et l'étendu des objets individuels sont déterminés en manière vectorielle,
- une fonction de structure (O1S, 02S) est déterminée pour les données de pixels de chaque objet et l'arrière-plan, permettant la représentation des données de pixels respectives comme résultat d'une opération mathématique élémentaire,
et que dans des analyses suivantes des images vidéo,
- les changements différentiels de la luminosité, des dimensions, de la position et de l'orientation des objets sont déterminés, chaque fois, en considérant les contours communs des objets adjacents,
- les objets définis ainsi, et l'arrière-plan, avec leurs données de luminosité, de couleur et de la position, ainsi que leurs données structurelles, sont arrangés et mis à la disposition dans un cadre de base ou cadre suivant (FR) structuré ;
- les données du cadre de base ou du cadre suivant ainsi produites sont transformées en données de pixels pour la décompression et la re-préparation de l'image, de manière que les données de la position du contour dans l'image sont obtenues à partir des données du cadre de base,
- la représentation à points d'image de l'arrière-plan et des objets, les limites de ces derniers étant déterminés par les données de la position du contour, est garnie de données de pixels, par rapport à la fonction de structure (O1S, 02S) correspondante, et les données de pixels au-dedans des contours sont restituées par rapport à la valeur de couleur dominante et au vecteur de gradient, ainsi qu'à la valeur de luminosité,
- et les données du cadre suivant sont appliquées à chaque représentation à points d'image, quand les objets sont déplacés et/ou changent.

2. Méthode selon la revendication 1, **caractérisée en ce que** les objets décrits sont enregistrés dans un réseau neuronal (NN1), qui sert à la future reconnaissance (OE) des objets dans des données des images vidéo (VD).

3. Méthode selon l'une des revendications précédentes, **caractérisée en ce que** des fonctions de structure (OS) qui ont été déterminées, sont enregistrées, avec leurs paramètres d'objets et d'arrière-plans, dans un réseau neuronal (NN2), qui sert de base de départ pour la future détermination des fonctions de structure (OS) avec leurs paramètres.

4. Méthode selon l'une des revendications précédentes, **caractérisée en ce que** chaque fonction de structure (OS) est représentée comme fonction mathématique, et les paramètres sont des valeurs à nombres entiers, et la fonction fournit un nombre illimité de chiffres après la virgule.

5. Méthode selon la revendication 4, **caractérisée en ce que** la fonction de structure (OS) est une fraction, une n-ième racine ou une fonction transcendante.

6. Méthode selon l'une des revendications 4 ou 5, **caractérisée en ce que** les valeurs à nombres entiers sont représentées, codées, comme puissances de nombres premiers ainsi que comme sommes ou différences de ces derniers.

7. Méthode selon l'une des revendications 4 à 6, **caractérisée en ce que** les paramètres sont représentés comme modulo 2 puissance 8, et la fonction qui est représentée comme 2 puissance 8 fournit de telles valeurs comme placées après la virgule.

8. Méthode selon l'une des revendications 4 à 7, **caractérisée en ce que** chaque fonction de structure (OS) est déterminée par rapport approximatif à une séquence de données de pixels, venant d'un segment d'une ligne d'analyse à longueur déterminée, ou d'un segment rectangulaire à points d'image.

9. Méthode selon la revendication 8, **caractérisée en ce que** le segment de ligne a une longueur de 64, 128 ou 256 bytes, ou que le segment a la grandeur de 8 fois 8 ou 16 fois 16 bytes.

10. Méthode selon l'une des revendications 8 ou 9, **caractérisée en ce que** la fonction de structure (OS) est adaptée à la séquence respective de données de pixels, par approximation successive, aussi longtemps ou aussi exactement que le permet un temps alloué (TMAX) ou une précision prédéfinie.

11. Méthode selon la revendication 10, **caractérisée en ce que** le temps alloué ou la précision prédéfinie sont déterminés par la position ou par une vitesse de changement de position, de la manière qu'aux objets situés et/ou restants au milieu de l'image est attribué un temps plus long et/ou une plus grande précision qu'aux objets marginaux et/ou agités relativement vites, et/ou à l'arrière-plan.

12. Méthode selon l'une des revendications précédentes, **caractérisée en ce que** seulement les objets constitués d'un nombre minimal de points d'image subissent une identification et caractérisation complémentaires, et que des objets plus petits sont attribués à l'arrière-plan.

13. Méthode selon la revendication 12, **caractérisée en ce que** les objets sont traités selon l'ordre décroissant de leur nombre de points d'image, tant que durera le temps de calcul disponible, ainsi, en cours de codage d'un contenu d'image, le nombre minimal de points d'image des objets dépend du temps de calcul disponible.
